Europäisches Patentamt

European Patent Office

Office européen des brevets

(19)

(11) **EP 1 424 474 A1**

(12) **EUROPEAN PATENT APPLICATION**
published in accordance with Art. 158(3) EPC

(43) Date of publication:
**02.06.2004 Bulletin 2004/23**

(51) Int Cl.⁷: **F02D 13/02**, F02D 15/00,
F01L 1/08, F01L 13/00

(21) Application number: **02762997.1**

(22) Date of filing: **04.09.2002**

(86) International application number:
**PCT/JP2002/008963**

(87) International publication number:
**WO 2003/029633 (10.04.2003 Gazette 2003/15)**

(84) Designated Contracting States:
**DE DK FI GB**

(30) Priority: **06.09.2001 JP 2001270241**

(71) Applicant: **Yanmar Co., Ltd.**
**Osaka-shi, Osaka 530-0013 (JP)**

(72) Inventors:
• **ASAI, Gou**
  **Osaka-shi, Osaka 530-0013 (JP)**

• **IMAMORI, Toshikazu**
  **Osaka-shi, Osaka 530-0013 (JP)**
• **MASUDA, Hiroshi**
  **Osaka-shi, Osaka 530-0013 (JP)**

(74) Representative: **Pluckrose, Anthony William et al**
**BOULT WADE TENNANT,**
**Verulam Gardens**
**70 Gray's Inn Road**
**London WC1X 8BT (GB)**

(54) **METHOD OF CONTROLLING INTERNAL COMBUSTION ENGINE**

(57)   The invention provides a control method of intending to improve a heat efficiency by an Atkinson cycle, improve a charging efficiency, improve an efficiency of a supercharger and increase a freedom of cam design. In particular, the invention relates to a control method of opening and closing a valve in an internal combustion engine with supercharger. An effective compression ratio is decreased by temporarily re-opening an exhaust valve in a compression stroke first stage, whereby a heat efficiency is improved without excessively increasing a cylinder internal pressure. Preferably, an exhaust valve re-opening time is set such that the effective compression ratio/expansion ratio is within a range from 0.5 to 0.9. Further, an exhaust valve is not temporarily opened in a compression stroke first stage, at a time of starting or driving under a low load, and the Atkinson cycle in accordance with the re-opening of the exhaust valve is achieved at a time of driving under a high load.

F i g . 3

EP 1 424 474 A1

**Description**

TECHNICAL FIELD

The present invention relates to a control method of an internal combustion engine, and more particularly to a control of opening and closing a valve in an internal combustion engine provided with a supercharger.

BACKGROUND ART

As a method of improving a heat efficiency of an internal combustion engine, the following methods have been conventionally employed.

[Conventional Method 1] method of increasing maximum cylinder internal pressure

This method corresponds to a method of increasing a maximum cylinder internal pressure so as to improve a heat efficiency, by making a compression ratio high and making a supercharging high.

[Conventional Method 2] method of increasing expansion ratio of engine

It is possible to improve a heat efficiency by increasing an expansion ratio of an engine.

[Conventional Method 3] method of achieving Atkinson cycle by delayed closing of air supply valve or inlet valve

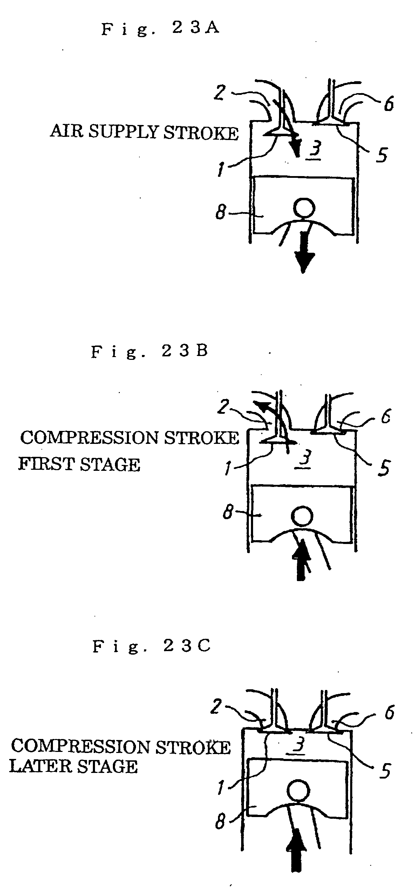

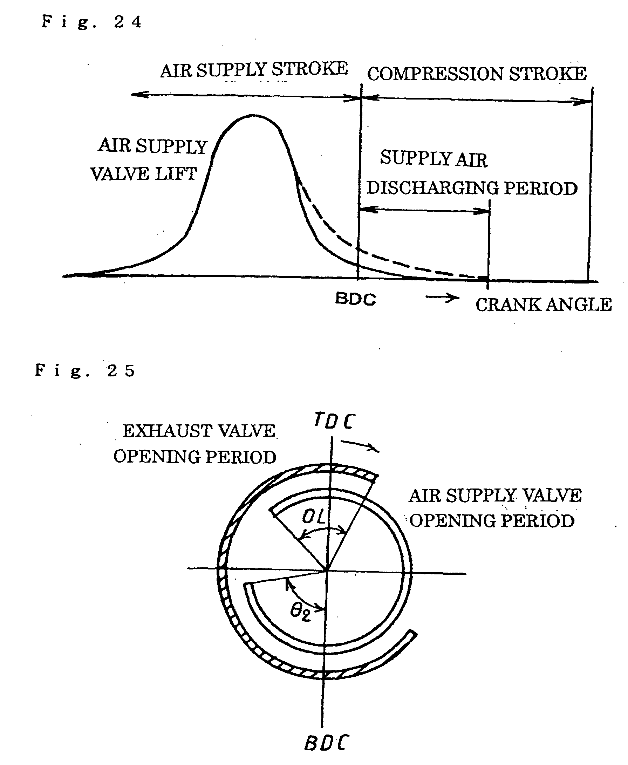

Fig. 23A shows an air supply stroke, Fig. 23B shows a first stage of a compression stroke, and Fig. 23C shows a later stage of the compression stroke. A compression start time can be delayed by setting an air supply valve 1 in an open state until the compression stroke first stage in which a piston 8 is ascended, and closing the air supply valve 1 at a later time than a normal time, as shown in Fig. 23B, at the same time of increasing the compression ratio of the engine, whereby it is possible to reduce an effective compression ratio and it is possible to obtain a large expansion ratio while restricting an excessive increase of the cylinder internal pressure. In this case, in Figs. 23A, 23B and 23C, reference numeral 2 denotes an air supply port, reference numeral 3 denotes a combustion chamber, reference numeral 5 denotes an exhaust valve, and reference numeral 6 denotes an exhaust port. Fig. 24 shows a change of an air supply valve lift in this method. The air supply valve lift shown by a solid line corresponds to a case of the normal cycle, and an air supply discharging period is secured till closely a middle of the compression stroke, by changing the air supply valve lift in the normal cycle to an air supply valve lift shape of the delayed closing as shown by a broken line.

Fig. 25 shows an exhaust valve opening period and an air supply valve opening period of the internal combustion engine formed as the Atkinson cycle as shown in Figs. 23A, 23B, 23C and 24, a range (a crank angle) denoted by reference symbol OL is an overlap period between the exhaust valve opening period and the air supply valve opening period, and a crank angle range 82 is an air supply discharging period secured by the air supply valve delayed closing.

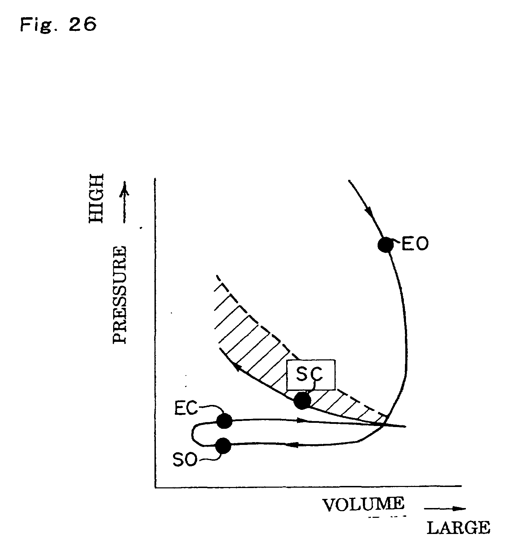

Fig. 26 is an Atkinson cycle indicator diagram in the internal combustion engine in Figs. 23A to 25, a compression work load corresponding to a hatched area is reduced in comparison with the normal compression stroke shown by a broken line, by setting the air supply vale closing time SC later than the normal one in the compression stroke first stage. In this case, reference symbol EO denotes an exhaust valve opening time, reference symbol SO denotes an air supply valve opening time, and reference symbol EC denotes an exhaust vale closing time. In accordance with the Atkinson cycle of this structure, it is possible to enlarge the expansion ratio while maintaining the maximum cylinder internal pressure, it is possible to increase the expansion ratio without increasing the cylinder internal pressure, and it is possible to improve the heat efficiency.

[Conventional Method 4] method of achieving Atkinson cycle on the basis of early closing of air supply valve

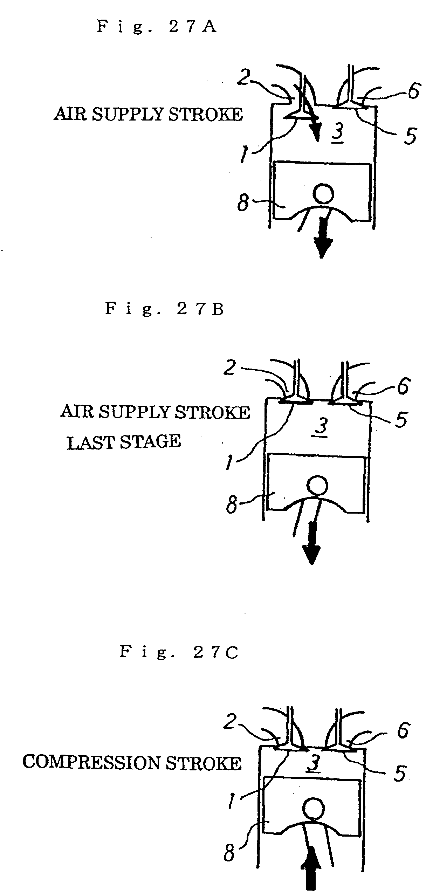

Fig. 27A shows an air supply stroke, Fig. 27B shows an air supply stroke later stage, and Fig. 27C shows a compression stroke. This method is a method of achieving the Atkinson cycle by reducing an air supply amount supplied within the combustion chamber 3 by closing the air supply valve 1, and making the effective compression ratio small by reducing the compression stroke, in the air supply stroke later stage in which the piston 8 descends as shown in Fig. 27B.

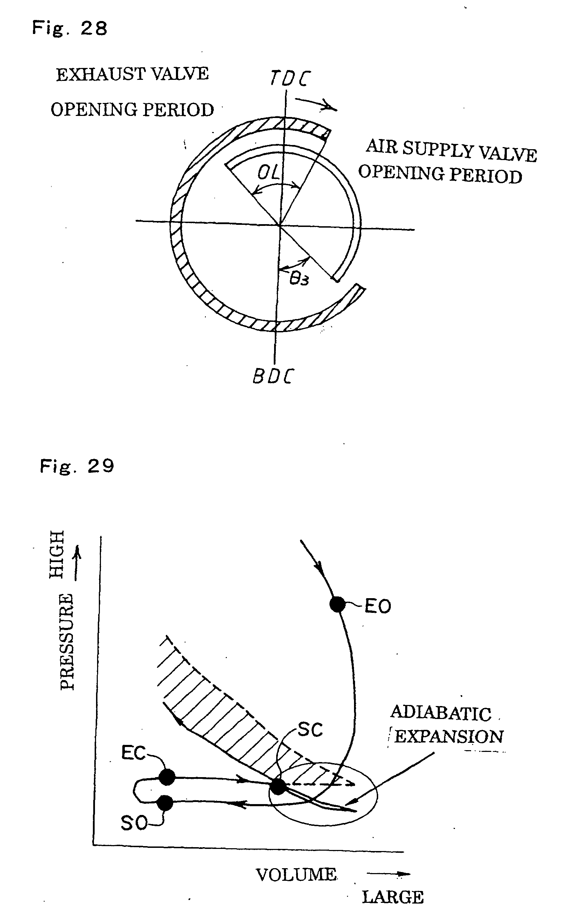

Fig. 28 shows an exhaust valve opening period and an air supply valve opening period in the internal combustion engine shown in Figs. 27A, 27B and 27C. Reference symbol OL denotes an overlap period between the exhaust valve opening period and the air supply valve opening period, and a crank angle θ3 is a crank angle (an angle of lead) between an air supply valve closing period and an air supply bottom dead center BDC. In other words, the air supply valve 1 is early closed the crank angle θ3 before the air supply bottom dead center BDC.

Fig. 29 is an Atkinson cycle indicator diagram in the internal combustion engine shown in Figs. 27A, 27B, 27C and 28, a compression work load corresponding to a hatched area is reduced in comparison with the normal compression stroke shown by a broken line, by quickening the air supply vale closing time SC to the air supply stroke later stage, whereby a gas exchange work load is reduced.

DISCLOSURE OF THE INVENTION

(Technical Problem to be Solved by the Invention)

In the method of increasing the maximum cylinder internal pressure in accordance with the conventional method 1, when the maximum cylinder internal pressure becomes too large, heat loss and a friction loss are increased, and a lack of strength is generated in each of the portions, whereby an engine reliability is lowered. Accordingly, an improvement factor of the heat efficiency has a limit.

In the method of increasing the expansion ratio in accordance with the conventional method 2, since the compression ratio is simultaneously increased in general, an increase of the maximum cylinder internal pressure can not be avoided.

In the Atkinson cycle made by the delayed closing of the air supply valve in accordance with the conventional method 3, the following problems are generated.

(a) Increase of Air Supply Temperature and Decrease of Charging Efficiency

Since a part of the supply air which is once heated in the combustion chamber is pushed back to the air supply port on the basis of the delayed closing effect of the air supply valve, the temperature of the supply air which is supplied in the next air supply stroke is increased, and the charging efficiency is lowered.

(b) Decrease of Supercharger Efficiency at High Supercharging Time

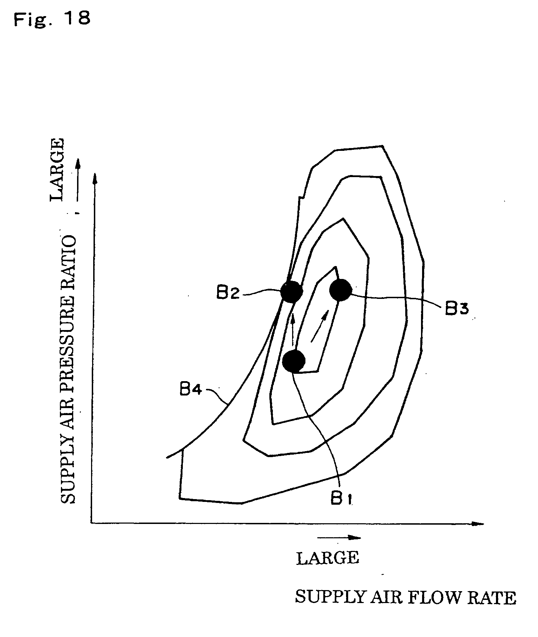

Since the air supply valve is opened in the compression stroke first stage, a heated air pushed back to the air supply port from the combustion chamber forms a resistance against the supply air from the supercharger even when the supercharged pressure is increased by improving a performance of the supercharger, whereby the load of the supercharger becomes heavy. Accordingly, an air supply flow rate is limited and the efficiency of the supercharger is lowered. In the case that the supply air pressure ratio is increased by increasing the supercharged pressure in a state in which the supply air amount is limited, an engine position is changed from a current position B1 to a position B2 as shown in Fig. 18, and the engine comes close to a surging line B4 of the supercharger, so that there is a risk that a surging is generated.

(c) Wasteful Outflow of Supply Air

The closing time of the air supply valve is delayed for the purpose of delaying the compression starting time, however, a shape of an air supply cam is limited to a valve lift shape as shown by a broken line in Fig. 24 in view of a design of the air supply cam shape, the air supply valve is in a state of being largely open near the compression bottom dead center BDC, and a large amount of air is flown out. The waster outflow of the supply air causes a reduction of output.

(d) Increase of Piston Loss

In the case of the internal combustion engine provided with the supercharger, an air supply manifold pressure is higher than an exhaust manifold pressure except the period exposed to the influence of the exhaust gas in the other cylinders. However, since the supply air is pushed back to the air supply port from the combustion chamber against the air supply manifold pressure, an ascending work load of the piston becomes high, the piston is hard to ascend, and the loss work is increased.

In the method of early closing the air supply valve in accordance with the conventional method 4, the following problems exist.

(a) Decrease of Lift Amount of Air Supply Valve

Since the lift period of the air supply valve is shortened, the lift amount of the air supply valve is limited geometrically at a time of designing the cam, so that the flow of the supply air from the air supply port to the combustion chamber is limited, and it is hard to secure a sufficient air supply amount, thereby causing a reduction of output.

(b) Decrease of Supercharger Efficiency

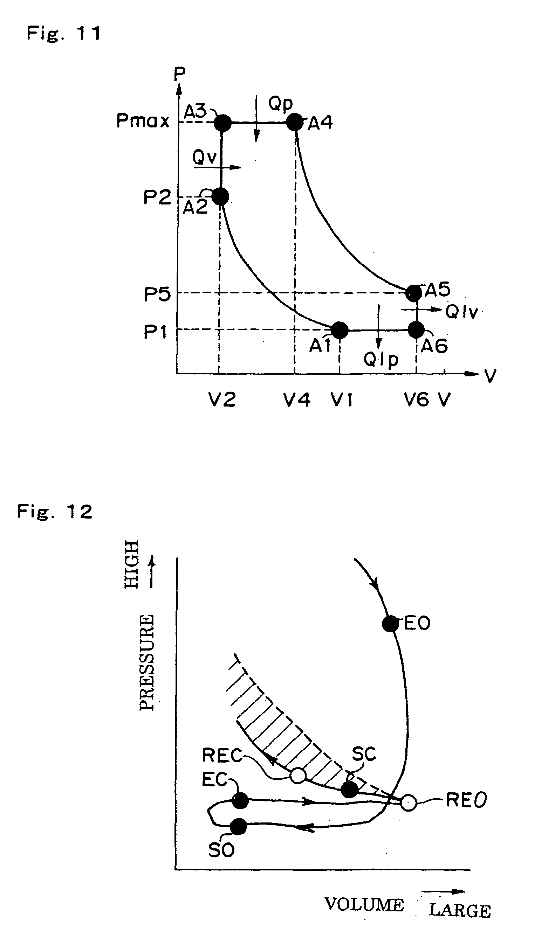

Since the air supply lift amount is limited in view of the cam design, in accordance with the shortened air supply period, the air supply amount is widely reduced, so that it is unavoidable to use a strong supercharger in order to secure the same air supply amount as the normal one. However, since the air supply lift amount is small even by increasing the supercharged pressure, the air supply amount is not increased so much, so that thesupercharger efficiency is lowered in the same manner as that of the air supply valve delayed closing method, and comes close to the surging line B4 of the supercharger as shown by the position B2 in Fig. 12. Accordingly, there is a risk that the surging is generated.

(c) Increase of Gas Temperature Within Cylinder

Since the air supply valve is closed in the air supply stroke later stage, the increase of the gas temperature within the cylinder is large, whereby the charging efficiency is lowered, and the compression end temperature is also increased.

(Solving Method)

In order to solve the problems mentioned above, the present invention provides a method of controlling an internal combustion engine for intending an Atkinson cycle of a combustion cycle by delaying a compression starting time with utilizing an exhaust valve, in place of contriving a closing time of the air supply valve, and in accordance with the invention on the basis of a first aspect, there is provided a method of controlling an internal combustion engine, wherein an effective compression ratio is decreased by temporarily opening an exhaust valve in a compression stroke first stage.

In accordance with the invention on the basis of a second aspect, there is provided a method of controlling an internal combustion engine as recited in the first aspect, wherein an expansion ratio is set higher (in a range from 15 to 20) than a conventional engine, and an effective compression ratio is optionally changed within a range from 0.5 to 0.9 times of the expansion ratio.

In accordance with the invention on the basis of a third aspect, there is provided a method of controlling an internal combustion engine as recited in the first or second aspect, wherein an exhaust valve is not temporarily opened in a compression stroke first stage, at a time of starting or driving under a low load.

In accordance with the invention on the basis of a fourth aspect, there is provided a method of controlling an internal combustion engine as recited in the first to third aspect, wherein the internal combustion engine is provided with a first exhaust cam having only a cam crest for an exhaust stroke, and a second exhaust cam having the cam crest for the exhaust stroke and a cam crest for re-opening the exhaust valve in the compression stroke first stage, and both the exhaust cams are used so as to be freely switched.

In accordance with the invention on the basis of a fifth aspect, there is provided a method of controlling an internal combustion engine as recited in the first to fourth aspect, wherein the internal combustion engine is provided with a first exhaust cam having only a cam crest for an exhaust stroke, and an auxiliary exhaust cam having only a cam crest for re-opening the exhaust valve in the compression stroke first stage, and the method freely switches a single drive by means of the first exhaust cam, and a parallel drive by means of the first exhaust cam and the auxiliary exhaust cam.

(Operative Effect in Comparison with Conventional Art)

In accordance with the present invention, since the Atkinson cycle is achieved by temporarily re-opening the exhaust valve in the compression stroke first stage so as to delay the compression starting time and make the effective compression ratio small, without delaying and quickening the closing time of the air supply valve, as is different from the conventional Atkinson cycle, it is possible to achieve a high expansion ratio while restricting the increase of the maximum cylinder internal pressure, and achieve an improvement of the heat efficiency, and the following effect can be obtained.

(1) Since the exhaust valve is re - opened in the compression stroke first stage, the freedom of designing the cam can be maintained, and it is possible to design such as to accurately relieve a necessary air amount to the exhaust port at a necessary time, in comparison with the Atkinson cycle ratio in accordance with the conventional air supply valve delayed closing or early closing. In other words, in comparison with the air supply valve delayed closing method, it is possible to easily design such as to prevent a large amount of supply air from being relieved at the compression bottom dead point, and in comparison with the air supply valve early closing method, it is possible to design such as to sufficiently secure the air supply lift amount.

(2) Since a part of the supply air supplied to the combustion chamber is discharged to the exhaust port, the supply air discharged in the manner mentioned above does not generate any resistance against the pressure supply air entering into the combustion chamber from the air supply port even in the case that the performance of the supercharger is improved and the supercharged pressure is increased. Accordingly, it is possible to sufficiently secure the supply air flow rate, the load of the supercharger is lightened, and the efficiency of the supercharger is improved. In other words, since it is possible to increase the air supply flow rate even in the case that the supercharged pressure is increased, the position gets away from the surging line B4 of the supercharger as shown by the position B3 in Fig. 18, there is no fear that the surging is generated, and it is possible to efficiently utilize the supercharger.

(3) Since a part of the supply air supplied to the combustion chamber is discharged to the exhaust port, it is possible to prevent the supply air temperature in the air supply port from being increased, in comparison with the delayed closing method of the air supply valve, whereby it is possible to prevent the charging efficiency from being lowered.

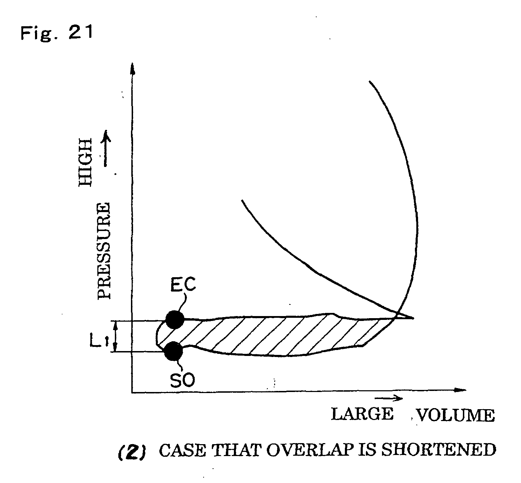

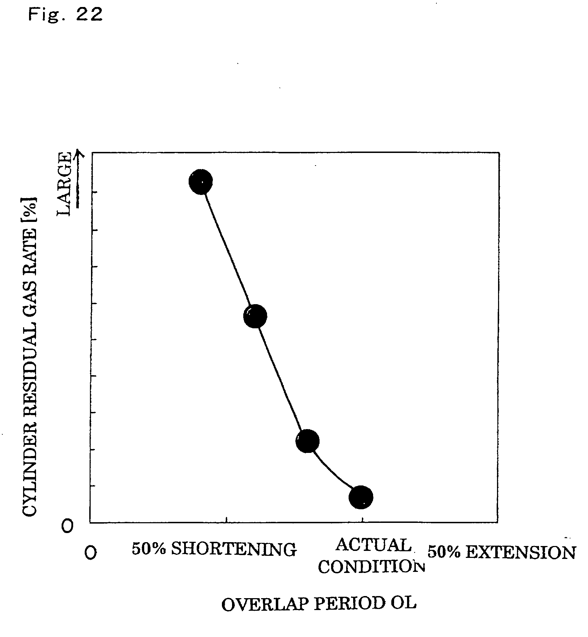

(4) Since a part of the supply air is relieved to the exhaust port so as to cool the exhaust system by re-opening the exhaust valve in the compression stroke first stage, it is possible to shorten the overlap period between the air supply valve opening period and the exhaust valve opening period while fixing the heat load of the exhaust system. Since it is possible to shorten the overlap period while fixing the heat load of the exhaust system as mentioned above, it is possible to increase the gas work exchange amount as shown in Fig. 21, and it is possible to increase the cylinder residual gas as shown in Fig. 22 so as to intend to reduce NOx on the basis of an internal EGR effect.

(5) In a multiple cylinder internal combustion engine with supercharger, an exhaust manifold pressure is lower than an air supply manifold pressure except a time affected by the exhaust gas in the other cylinders. Since a part of the supply air is discharged to the exhaust manifold, it is possible to restrict an ascending work amount of the piston to a low level in comparison with the air supply valve delayed closing method, so that it is possible to make the piston loss small.

(6) It is possible to introduce an exhaust pulse from the other cylinders in the case of well aligning the timing and the piping, by temporarily opening the exhaust valve in the compression stroke first stage. Accordingly, it is possible to obtain the internal EGR effect so as to intend to prevent the NOx from being reduced or increased.

(7) It is possible to increase the heat efficiency while maintaining the cylinder internal pressure by making the expansion ratio high and setting the effective compression ratio within a range from 0.5 to 0.9 times of the expansion ratio. Further, it is possible to inhibit a smoke from being generated, by restricting the reduction of an excess air factor and making a combustion injection pressure high.

(8) If the exhaust valve is set such as not to be opened in the compression stroke first stage, at the starting time or the low load operating time, it is possible to sufficiently secure an evaporation of the fuel, and it is possible to maintain a starting performance and a low load operating performance. On the other hand, at the high load time, it is possible to achieve an improvement of the heat efficiency by re-opening the exhaust valve in the exhaust stroke first stage and making the Atkinson cycle.

(9) In the case that the internal combustion engine is provided with the first exhaust cam having only the cam crest for the exhaust stroke, and the second exhaust cam having the cam crest for the exhaust stroke and the cam crest for re-opening the exhaust valve in the compression stroke first stage, and both the exhaust cams are used so as to be freely switched, it is possible to easily switch between the normal combustion cycle and the Atkinson cycle, in the starting time or the low load operating time, and the high load operating time.

(10) In the case that the internal combustion engine is provided with the first exhaust cam having only the cam crest for the exhaust stroke, and the auxiliary exhaust cam having only the cam crest for re-opening the exhaust valve in the compression stroke first stage, and the method freely switches the single drive by means of the first exhaust cam, and the parallel drive by means of the first exhaust cam and the auxiliary exhaust cam, it is possible to easily switch between the normal combustion cycle and the Atkinson cycle, in the starting time or the low load operating time, and the high load operating time.

BRIEF DESCRIPTION OF THE DRAWINGS

Fig. 1A is a cross sectional schematic view of a cylinder showing an air supply stroke of a control method in accordance with the present invention;
Fig. 1B is a cross sectional schematic view of the cylinder showing a compression stroke first stage of the control method in accordance with the present invention;

Fig. 1C is a cross sectional schematic view of the cylinder showing a compression stroke later stage of the control method in accordance with the present invention;

Fig. 2 is a view showing an exhaust valve lift and an air supply valve lift in accordance with the present invention;

Fig. 3 is a view showing an air supply valve opening period, an exhaust valve opening period and an exhaust valve re-opening period in accordance with the present invention;

Fig. 4 is a graph showing a relation among an exhaust valve lift, an exhaust manifold pressure, an air supply manifold pressure and a cylinder internal pressure at an exhaust valve re-opening time in accordance with the present invention;

Fig. 5 is a perspective view of an exhaust cam for carrying out the present invention;

Fig. 6 is a cross sectional view in a cross section perpendicular to an axis of the exhaust cam in Fig. 5, in which both the exhaust cams are described in parallel;

Fig. 7 is a perspective view of another exhaust cam for carrying out the present invention;

Fig. 8 is a cross sectional view in a cross section perpendicular to an axis of the exhaust cam in Fig. 7, in which both the exhaust cams are described in parallel;

Fig. 9 is a perspective view of the other exhaust cam for carrying out the present invention;

Fig. 10 is a cross sectional view in a cross section perpendicular to an axis of each of the exhaust cams in Fig. 9, in which both the exhaust cams are described in parallel;

Fig. 11 is a standard indicator diagram of an Atkinson cycle;

Fig. 12 is an indicator diagram of an Atkinson cycle in accordance with the present invention;

Fig. 13 is a view showing a relation between compression ratio/expansion ratio and an excess air factor;

Fig. 14 is a view showing a relation between a fuel injection pressure and a smoke;

Fig. 15 is a view showing a relation between a specific fuel consumption and a maximum cylinder internal pressure;

Fig. 16 is a view showing a relation between the specific fuel consumption and an NOx concentration;

Fig. 17 is a view showing a relation between a smoke index and the NOx concentration;

Fig. 18 is a view showing a relation between a supply air flow rate and a supply air pressure ratio;

Fig. 19 is a view showing a relation between an overlap period and a fresh air blow-by rate;

Fig. 20 is an index diagram of a combustion cycle in the case that an overlap period between the exhaust valve opening period and the air supply valve opening period is long;

Fig. 21 is an index diagram of a combustion cycle in the case that the overlap period between the exhaust valve opening period and the air supply valve opening period is short;

Fig. 22 is a view showing a relation between the overlap period and a cylinder residual gas rate;

Fig. 23A is a cross sectional schematic view of a cylinder showing an air supply stroke of an Atkinson cycle in accordance with a conventional air supply valve delayed closing;

Fig. 23B is a cross sectional schematic view of the cylinder showing a compression stroke first stage of the Atkinson cycle in accordance with the conventional air supply valve delayed closing;

Fig. 23C is a cross sectional schematic view of the cylinder showing a compression stroke later stage of the Atkinson cycle in accordance with the conventional air supply valve delayed closing;

Fig. 24 is a view showing an air supply valve lift corresponding to Figs. 23A, 23B and 23C;

Fig. 25 is a view showing an air supply valve opening period and an exhaust valve opening period corresponding to Figs. 23A, 23B and 23C;

Fig. 26 is an index diagram of the Atkinson cycle corresponding to Figs. 23A, 23B and 23C;

Fig. 27A is a cross sectional schematic view of a cylinder showing an air supply stroke of an Atkinson cycle in accordance with a conventional air supply valve early closing;

Fig. 27B is a cross sectional schematic view of the cylinder showing an air supply stroke later stage of the Atkinson cycle in accordance with the conventional air supply valve early closing;

Fig. 27C is a cross sectional schematic view of the cylinder showing a compression stroke of the Atkinson cycle in accordance with the conventional air supply valve early closing;

Fig. 28 is a view showing an air supply valve opening period and an exhaust valve opening period corresponding to Figs. 27A, 27B and 27C; and

Fig. 29 is an index diagram of the Atkinson cycle corresponding to Figs. 27A, 27B and 27C.


BEST MODE FOR CARRYING OUT THE INVENTION


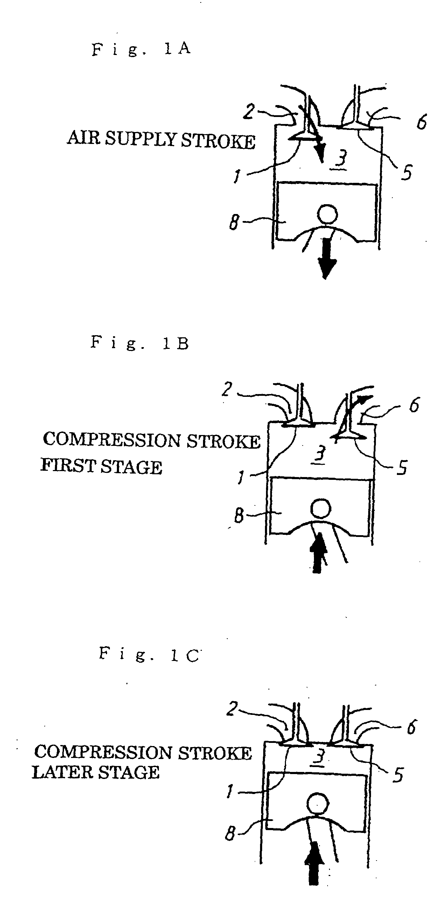

Figs. 1A to 1C show a stroke change within a cylinder in the case that the present invention is applied to a direct injection type multiple cylinder diesel engine with supercharger. In an air supply stroke shown in Fig. 1A, since an air supply valve 1 is open, a supply air pressurized by the supercharger is supplied from an air supply port 2 into a combustion chamber 3. In a compression stroke first stage of a piston ascending process shown in Fig. 1B, the air supply valve 1 is closed and an exhaust valve 5 is temporarily re - opened, thereby evacuating a compressed pressure within the combustion chamber 3 from an exhaust port 6. Further, in a compression stroke later stage shown in Fig. 1C, the exhaust valve 5 for re-opening mentioned above is closed, and the supply air is substantially compressed. In other words, a compression start time is delayed by temporarily re-opening the exhaust valve 5 in the compression stroke first stage, thereby lowering an effective compression ratio and preventing a maximum cylinder internal pressure from being excessively increased.

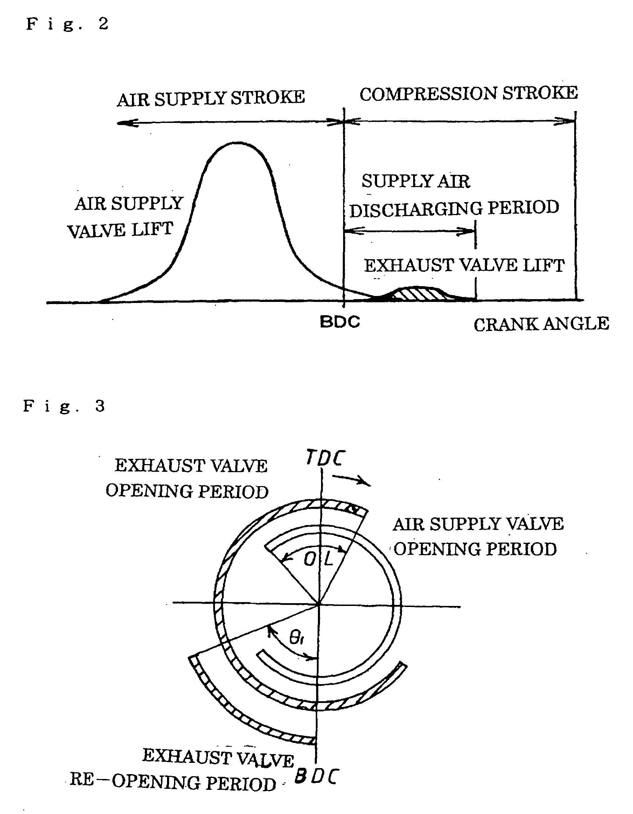

Fig. 2 shows an exhaust valve lift at a time of re-opening the exhaust valve in Fig. 1B together with an air supply valve lift. A shape of the air supply valve lift is the same as the normal air supply valve lift which is neither the delayed closing nor the early closing, and is in a slightly open state at a compression bottom dead center BDC.

The exhaust valve at the re-opening time is structured such as to start lifting (opening) little by little from the compression bottom dead center BDC, start closing little by little after maintaining a fixed amount open state for a fixed period, and close in the middle of the compression stroke. This exhaust valve re-opening period corresponds to a supply air discharging period for discharging the supply air to the exhaust side.

Fig. 3 shows a relation among the exhaust valve opening period, the air supply valve opening period and the exhaust valve re-opening period. The exhaust valve opening period is from a later stage of an explosion stroke to an early stage of the air supply stroke via the exhaust stroke, the air supply valve opening period is from a final stage of the exhaust stroke to an early stage of the compression stroke via the air supply stroke, and an overlap period OL between the air supply valve opening period and the exhaust valve opening period exists in the vicinity of an exhaust gas top dead center (a supply air top dead center) TDC. The exhaust valve re-opening period (the supply air discharging period) is from the air supply bottom dead center BDC to about a middle of the compression stroke, as described in Fig. 2.

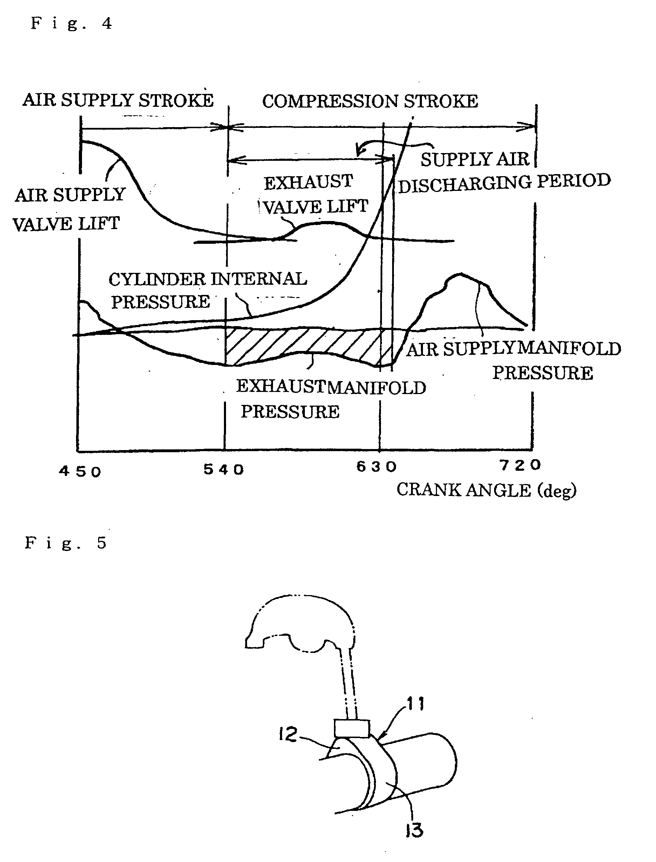

Fig. 4 shows a relation among the exhaust valve lift, an exhaust manifold pressure, an air supply manifold pressure and a cylinder internal pressure at an exhaust valve re-opening time. When the exhaust gas of the other cylinders has an influence, the exhaust manifold pressure is temporarily higher than the air supply manifold pressure, however, the air supply manifold pressure pressurized by the supercharger is basically higher than the exhaust manifold pressure, and in the embodiment, the re-opening period (the supply air discharging period) of the exhaust valve is positioned within the period in which the air supply manifold pressure is higher than the exhaust manifold pressure.

A piston ascending work such as a case of a supply air delayed closing type Atkinson cycle is reduced by temporarily re-opening the exhaust valve so as to discharge a part of the supply air to the exhaust port, in a period in which the exhaust manifold pressure is lower than the air supply manifold pressure, in the compression stroke first stage, as mentioned above.

Fig. 11 is an indicator diagram showing a summary of a well-known theoretical Atkinson cycle (output cycle). A description will be briefly given of a concept of the Atkinson cycle by utilizing Fig. 11. Reference symbol V denotes a total volume, reference symbol V1 denotes a volume of an adiabatic compression starting time A1, reference symbol V2 denotes a volume of an adiabatic compression finishing time A2, reference symbol V4 denotes a volume of an adiabatic expansion starting time A4, reference symbol V6 denotes a volume of an adiabatic expansion finishing time (an exhaust valve opening time) A5, reference symbol Qv denotes a heating amount of an isovolumetric heating period (A2 → A3), reference symbol Qp denotes a heating amount of an isobaric(or isotacitc) heating period (A3 → A4), reference symbol Q1v denotes a heat dissipation amount of an isovolumetric heat dissipating period (A5 → A6), and reference symbol Qlp denotes a heat dissipation amount of an isobaric heat dissipating period (A6 → A1).

Formulas of amount of heat in the respective periods mentioned above are as follows.

Adiabatic compression period (A1 → A2)

$$P1V1^\kappa = P2V2^\kappa$$

Isovolumetric heating period (A2 → A3)

$$Qv = Cv \cdot V2 \cdot (Pmax - P2)/R$$

Isobaric heating period (A3 → A4)

$$Qp = Cp \cdot Pmax \cdot (V4 - V2)/R$$

Adiabatic expansion period (A4 → A5)

$$Pmax \cdot V4^{\kappa} = P5V6^{\kappa}$$

Isovolumetric heat dissipating period (A5 → A6)

$$Q1v=Cv \cdot V6 \cdot (P5-P1)$$

Isobaric heat dissipating period (A6 → A1)

$$Q1p=Cp \cdot P1 \cdot (V6-V1)$$

In the above formulas, reference symbol $\kappa$ is a politropic exponent, reference symbol R is a gas constant, reference symbol Cv is an isovolumic specific heat, and reference symbol Cp is an isopiestic specific heat.

In the Atkinson cycle, a theoretic heat efficiency $\eta$th is expressed by the following formula.

$$\eta th = 1 - (Q1v + Q1p)/(Qv + Qp) \tag{1}$$

The theoretical heat efficiency $\eta$th is expressed by the formula (2) by introducing the relations of the amount of heat and the like and the following relations to the formula (1) of the heat efficiency.

Engine apparent compression ratio $\varepsilon$ = V/V2
Effective compression ratio $\varepsilon'$ = V1/V2
EO volume ratio $\nu$ = V1/V6
Expansion ratio $\beta$ = V6/V2
Effective compression ratio/expansion ratio $\phi$ = V1/V6
Explosion degree $\rho$ = Pmax/P2
Cut-off ratio $\sigma$ = V4/V2

$$\eta th = 1 - \{1/(\nu\phi\varepsilon)\kappa\} \times [\nu\varepsilon\{\rho(\sigma\phi)\kappa - 1 + \kappa(1 - \phi)\}/\{\rho - 1 +\kappa\rho(\sigma - 1)\}] \tag{2}$$

The present invention set preferably such that in the formula (2), the respective ratios are within the following ranges: EO volume ratio $\nu$ is 0.8 to 0.95, effective compression ratio/expansion ratio $\phi$ is 0.5 to 0.9, and apparent compression ratio $\varepsilon$ is 15 to 20.

[Structure of Exhaust Cam]

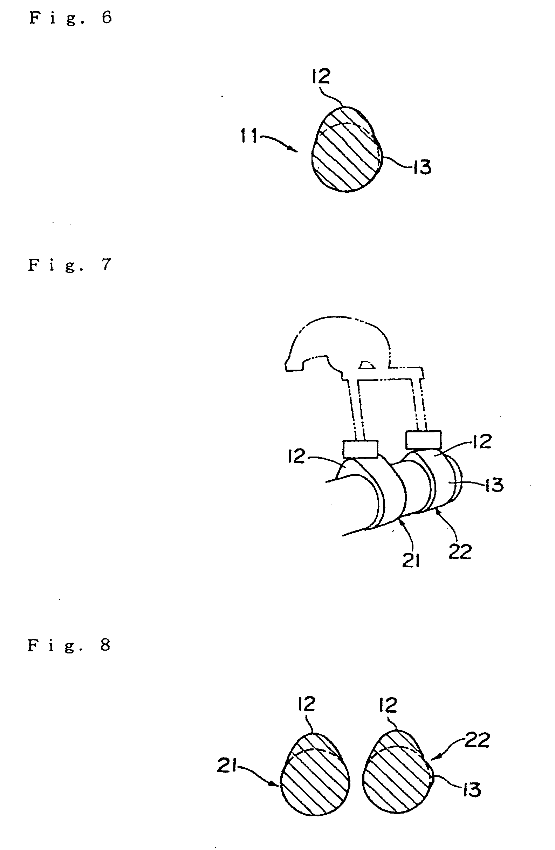

Figs. 5 and 6 show an example of an exhaust cam structure for re-opening the exhaust valve in the compression stroke first stage. In this example, a cam crest 12 for an exhaust stroke and a cam crest 13 for re-opening are formed in the same exhaust cam 11.

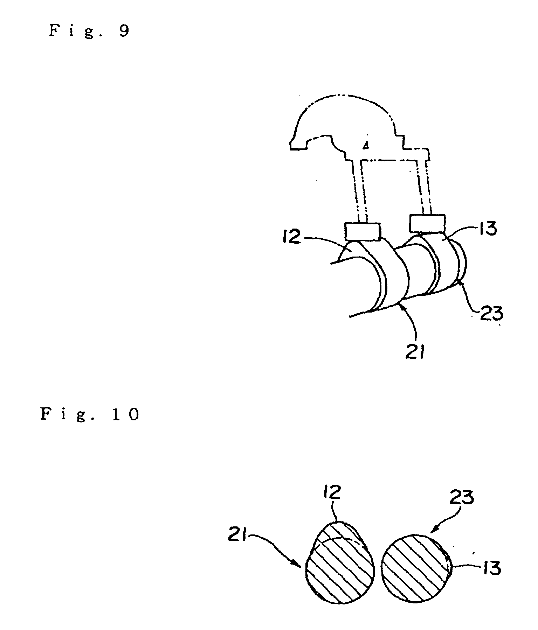

Figs. 7 and 8 show another example of the exhaust cam structure for carrying out the exhaust valve re-opening. This example is provided with a first exhaust cam 21 having only the cam crest 12 for the exhaust stroke, and a second cam 22 having the cam crest 12 for the exhaust stroke and the cam crest 13 for re-opening, and both the exhaust cams 21 and 22 are used so as to be freely switched. For example, at the starting time or the low load operation time, in order to sufficiently secure the evaporation of the fuel and improve a heat efficiency (a maximum cylinder internal pressure), it is preferable to set the compression ratio high, so that the first exhaust cam 21 is utilized. On the other hand, at the high load time, the exhaust valve is re - opened in the compression stroke first stage by utilizing the second exhaust cam 22, thereby making the Atkinson cycle.

Figs. 9 and 10 show the other example of the exhaust cam structure. This example is provided with the first exhaust cam 21 having only the cam crest 12 for the exhaust stroke, and an auxiliary exhaust cam 23 having only the cam crest 13 for re-opening, and the cams are used by switching between a simultaneous and parallel use of both the exhaust cams 21 and 23, and an independent use of the first exhaust cam 21. For example, at the starting time or the low load operation time, in order to sufficiently secure the evaporation of the fuel, it is preferable to set the compression ratio high, so that only the first exhaust cam 21 is independently used. On the other hand, at the high load time, the first exhaust cam 21 and the auxiliary exhaust cam 23 are used simultaneously and in parallel, and the exhaust valve is re - opened in the compression stroke first stage, thereby making the Atkinson cycle.

(Effect)

Fig. 12 is an indicator diagram of the combustion cycle in the case of increasing the engine compression ratio, that is, the expansion ratio, and temporarily re-opening the exhaust valve in the compression stroke first stage. Reference symbol EO corresponds to an exhaust valve opening time, reference symbol SO corresponds to an air supply valve opening time, reference symbol EC corresponds to an exhaust valve closing time, and reference symbol SC corresponds to an air supply valve closing time, which are shown by a black circle. Further, reference symbol REO corresponds to a start time of an exhaust valve re-opening, and reference symbol REC corresponds to a closing time (finishing time) of an exhaust valve re-opening, which are shown by a white circle. By delaying the compression start time to the time of REC in accordance with the re-opening (REO → REC) of the exhaust valve, the compression stroke corresponding to a hatched area is reduced in comparison with the comparison stroke of the normal cycle shown by a broken line, whereby the effective compression ratio is lowered. In accordance with the Atkinson cycle mentioned above, it is possible to enlarge the expansion ratio in a state in which the maximum cylinder internal pressure is maintained approximately in the same manner as the normal case, and the heat cycle efficiency is improved.

By aligning the timing of the exhaust re-opening, it is possible to introduce the exhaust pulse from the other cylinders into the cylinder, whereby it is possible to achieve an internal EGR effect and it is possible to intend to reduce NOx.

By re-opening the exhaust valve in the compression stroke, it is possible to cool the exhaust valve or the like in accordance with a blow by of the supply air, whereby it is possible to shorten the overlap period between the exhaust valve opening period and the air supply valve opening period while keeping the heat load of the exhaust system constant, a gas exchange work load is improved, it is possible to achieve a high heat efficiency, the internal EGR gas amount is increased, and it is possible to achieve a low NOx.

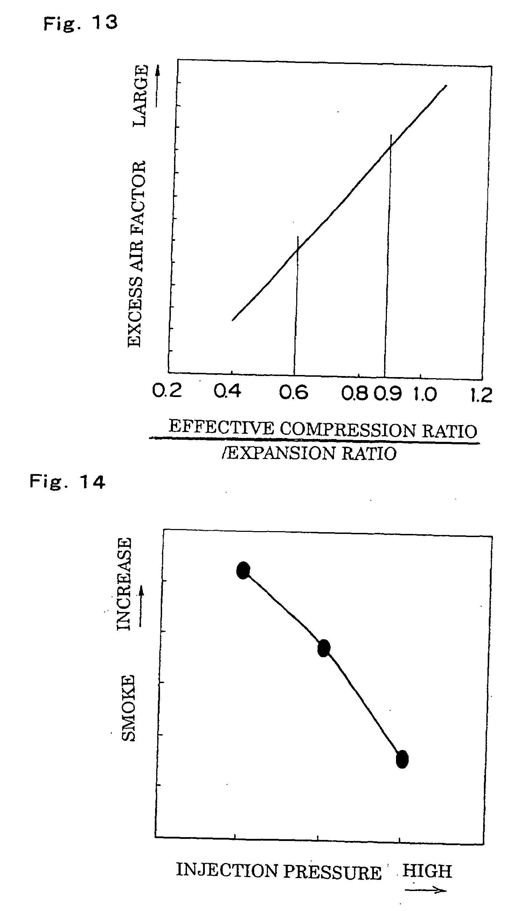

Fig. 13 is a graph showing a relation between the effective compression ratio/expansion ratio and an excess air factor. In the case of the normal cycle to which the Atkinson cycle is not introduced, the effective compression ratio/expansion ratio is approximately 1. On the contrary, the heat efficiency is improved by making the effective compression ratio/expansion ratio $\phi$ small to a level within a range from 0.5 to 0.9 on the basis of the exhaust valve re-opening. However, since the excess air factor is lowered in accordance with a degree that the effective compression ratio/expansion ratio is smaller than 1, the smoke is easily generated. In order to cope with this matter, the combustion injection pressure is made higher than the normal one, whereby the smoke is prevented from being generated. In other words, since the combustion injection pressure and the smoke amount are in an inversely proportional relation as shown in Fig. 14, it is possible to achieve an improvement of the heat efficiency and a reduction of the smoke amount, by increasing the injection pressure while lowering the effective compression ratio/expansion ratio $\phi$ to the range from 0.5 to 0.9 as mentioned above.

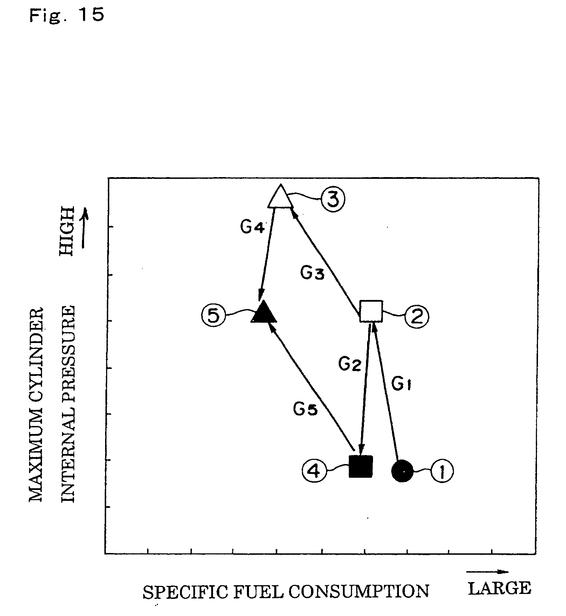

Fig. 15 shows a relation between a specific fuel consumption and a maximum cylinder internal pressure. A black circle position ① corresponds to the case of the normal cycle to which the Atkinson cycle is not introduced, a black triangle position ⑤ corresponds to a state in which the OL period is shortened and the supply air pressure is increased at the same time when the Atkinson cycle is introduced in accordance with the present invention. In the position ⑤, it is possible to widely lower the specific fuel consumption in comparison with the position ①, and it is possible to restrict the increase of the maximum cylinder internal pressure to an allowable level in a point of a strength or the like.

A white square position ② and a white triangular position ③ correspond to a conventional approach for improving the heat efficiency. The position runs from the position ① to the position ② along an arrow G1 by increasing the compression ratio and shortening the OL period, and further runs to the position ③ along an arrow G3 by increasing the supply air pressure. In the position ②, the maximum cylinder internal pressure is increased to an allowable level in a point of the strength or the like, however, the specific fuel consumption is hardly lowered. In the position ③, the specific fuel consumption is widely lowered, however, the maximum cylinder internal pressure is excessively increased to a level in which a lack of strength is generated.

A black square position ④ corresponds to a state in which the Atkinson cycle is introduced from the position ① in accordance with the present invention and the OL period is shortened. The cylinder internal pressure is lowered to the same level as that of the normal cycle in the position ①, in comparison with the position ② in the conventional example, as shown by an arrow G2, and the specific fuel consumption is lowered in comparison with the position ②.

The position runs to the position ⑤ by making the supercharged pressure higher from the state in the position ④ mentioned above, however, the specific fuel consumption is widely lowered as shown by an arrow G5, and the increase of the cylinder internal pressure can be restricted to the increase about the position ② mentioned above.

In this case, the position also runs to the position ⑤ as shown by an arrow G4, by introducing the Atkinson cycle in accordance with the present invention from the position ③.

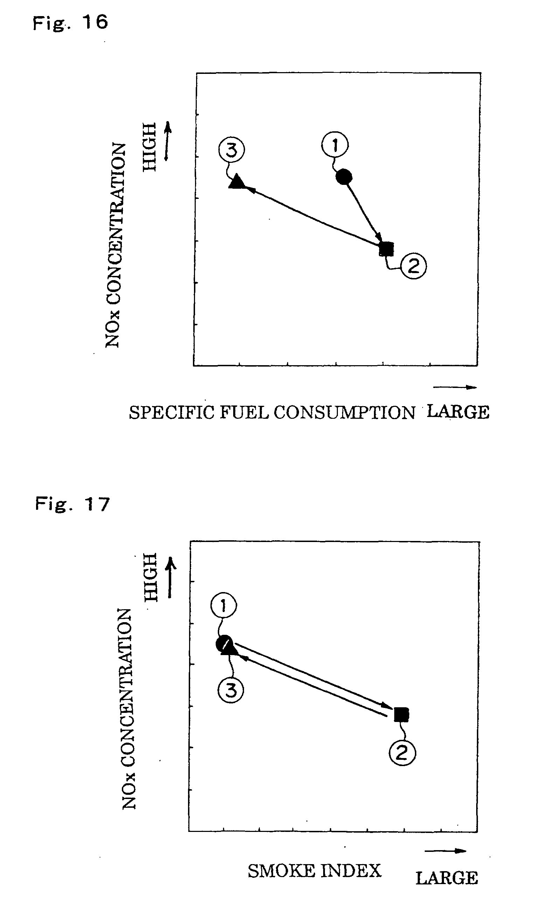

Fig. 16 is a graph showing a relation between the specific fuel consumption and the NOx. A black circle position ① corresponds to the case of the normal cycle which does not employ the Atkinson cycle, a black square position ② corresponds to the case to which the Atkinson cycle is introduced in accordance with the present invention without changing the supercharged pressure from the position ① mentioned above. In the position ②, the NOx is reduced, however, the specific fuel consumption is a little increased. In accordance with an increase of the supply air pressure, it is possible to widely reduce the specific fuel consumption while restricting the NOx to the same level as that of the position ①, as shown by a black triangle position ③.

Fig. 17 is a graph showing a relation between a smoke index and the NOx. Positions ①, ② and ③ have the corresponding conditions to those in Fig. 16. The position ② corresponds to the case to which the Atkinson cycle is introduced without changing the supercharged pressure from the position ① corresponding to the normal cycle. In this position, the NOx is reduced, however, the smoke is increased. On the contrary, it is possible to restrict the NOx and the smoke to the same level as those of the actual position ① as in the position ③, by increasing the supply air pressure.

Fig. 18 is an index of a working state of a supercharger compressor. Fig. 18 is a graph showing a supply air pressure ratio by a vertical axis and a compressor efficiency and a surging line with respect to a supply air flow rate by a horizontal axis. In this drawing, reference symbol B1 shows a case of the normal cycle to which the Atkinson cycle is not introduced, reference symbol B2 shows a case that the Atkinson cycle is formed by the air supply valve delayed closing or the air supply valve early closing, reference symbol B3 shows a case that the Atkinson cycle is formed by the re-opening of the exhaust valve in accordance with the present invention, and reference symbol B4 shows a surging line of the supercharger.

In Fig. 18, in the Atkinson cycle formed by the air supply valve early closing or the air supply valve delayed closing, since the supply air is returned from the air supply valve to the air supply port even in the case that the supply air pressure ratio is increased by increasing the supercharged pressure, only the supercharged pressure is increased and the supply air flow rate is not increased as shown by the point B2, and the point comes close to the surging line B4 of the supercharger, so that it is impossible to efficiently utilize the supercharger.

On the other hand, in the case of the Atkinson cycle formed by the re-opening of the exhaust valve in accordance with the present invention, since the supply air is discharged to the exhaust port along the flow of the supply air, the supply air flow rate is increased together with the supply air pressure ratio by increasing the supercharged pressure. Accordingly, the point does not come close to the surging line B4 as is different from the point B3, and it is possible to efficiently utilize the supercharger.

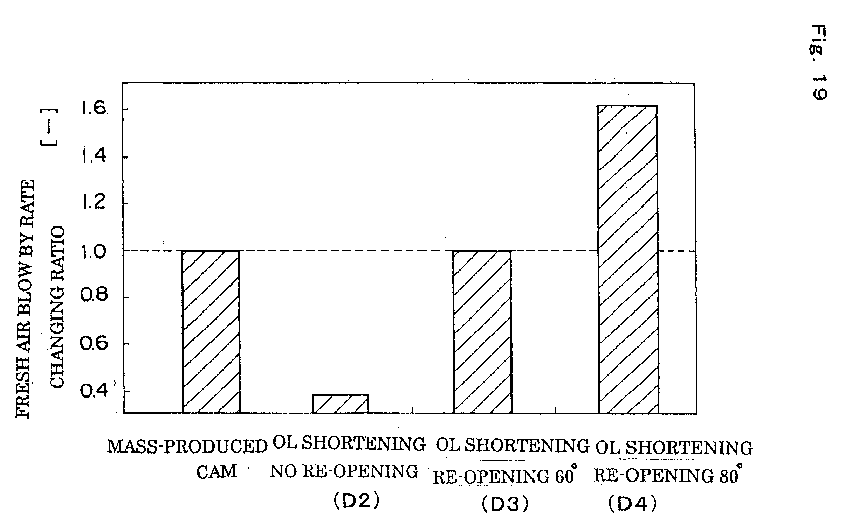

Fig. 19 is a graph showing a relation between the overlap period (the period OL in Fig. 3) between the exhaust valve opening period and the air supply valve opening period, and a fresh air blow by rate. A mass-produced cam in a graph D1 corresponds to a case of the normal cycle which is not formed as the Atkinson cycle, and a fresh air blow by rate in this case is set to 1.

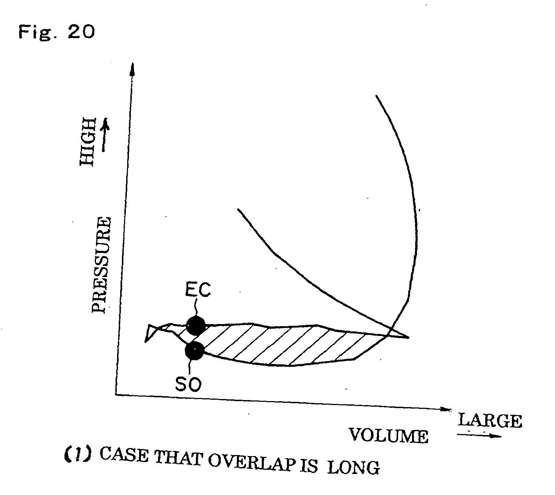

In the case that the overlap period OL is long, an atrophied state is formed from an air supply valve opening period SO to an exhaust valve closing period EC as shown in Fig. 20, a hatched area becomes small, and a loss of heat efficiency is generated. On the other hand, in the case that the overlap period OL is simply shortened, it is possible to secure a rising edge L from the air supply valve opening period SO to the exhaust valve closing period EC as shown in Fig. 21, whereby it is possible to secure the hatched area large, and the heat efficiency is improved, however, the fresh air blow by rate is widely reduced as shown by a graph D2 in Fig. 19, and the exhaust gas temperature becomes too high.

On the contrary, in the case that the overlap period OL is shortened as shown by a graph D3, and the re-opening period (a range of a crank angle θ1 in Fig. 3) in the compression stroke first stage of the exhaust valve is executed by 60 degree in accordance with the present invention, it is possible to obtain the fresh air blow by rate in the same manner as that of the conventional mass-produced cam D1 as shown in Fig. 19, as well as it is possible to obtain the improvement of the heat efficiency as described in Fig. 21, so that it is possible to prevent the exhaust gas temperature from being increased, and it is possible to maintain the exhaust gas load constant.

In the case that the overlap period OL is shortened as shown by a graph D4, and the re-opening period (a range of θ1 in Fig. 3) in the compression stroke first stage of the exhaust valve is increased to 90 degree, it is possible to obtain the improvement of the heat efficiency as described in Fig. 21, however, there is a tendency that the fresh air blow by amount is increased too much in the exhaust valve re-opening period.

Accordingly, in preferable, it is possible to achieve the improvement of the heat efficiency, prevention of the exhaust gas temperature from being increased and prevention of the fresh air blow by from being too much, by setting the exhaust valve re-opening period θ1 in Fig. 3 to about 30 to 60 degree, as well as shortening the overlap period OL.

Fig. 22 shows a relation between a cylinder residual gas rate and the overlap period OL. When the overlap period OL is shortened, the cylinder residual gas rate is increased, whereby it is possible to achieve the internal EGR effect and it is possible to intend to reduce the NOx.

(Industrial Applicability)

The present invention can be also utilized in gas and gasoline direct injection type internal combustion engines.

**Claims**

1. A method of controlling an internal combustion engine, wherein an effective compression ratio is decreased by temporarily opening an exhaust valve in a compression stroke first stage.

2. A method of controlling an internal combustion engine as claimed in claim 1, wherein an effective compression ratio is changed by a range from 0.5 to 0.9 times of the expansion ratio.

3. A method of controlling an internal combustion engine as claimed in claim 1 or 2, wherein an exhaust valve is not temporarily opened in a compression stroke first stage, at a time of starting or driving under a low load.

4. A method of controlling an internal combustion engine as claimed in any one of claims 1 to 3, wherein the internal combustion engine is provided with a first exhaust cam having only a cam crest for an exhaust stroke, and a second exhaust cam having the cam crest for the exhaust stroke and a cam crest for re-opening the exhaust valve in the compression stroke first stage, and both the exhaust cams are used so as to be freely switched.

5. A method of controlling an internal combustion engine as claimed in any one of claims 1 to 4, wherein the internal combustion engine is provided with a first exhaust cam having only a cam crest for an exhaust stroke, and an auxiliary exhaust cam having only a cam crest for re-opening the exhaust valve in the compression stroke first stage, and the method freely switches a single drive by means of the first exhaust cam, and a parallel drive by means of the first exhaust cam and the auxiliary exhaust cam.

Fig. 1A

AIR SUPPLY STROKE

Fig. 1B

COMPRESSION STROKE
FIRST STAGE

Fig. 1C

COMPRESSION STROKE
LATER STAGE

Fig. 2

AIR SUPPLY STROKE — COMPRESSION STROKE

AIR SUPPLY VALVE LIFT

SUPPLY AIR DISCHARGING PERIOD

EXHAUST VALVE LIFT

BDC — CRANK ANGLE

Fig. 3

EXHAUST VALVE OPENING PERIOD

TDC

AIR SUPPLY VALVE OPENING PERIOD

$O_L$

$\theta_I$

EXHAUST VALVE RE−OPENING PERIOD · BDC

Fig. 4

AIR SUPPLY STROKE          COMPRESSION STROKE

AIR SUPPLY
VALVE LIFT

EXHAUST
VALVE LIFT

SUPPLY AIR
DISCHARGING PERIOD

CYLINDER INTERNAL
PRESSURE

AIR SUPPLY MANIFOLD
PRESSURE

EXHAUST MANIFOLD
PRESSURE

450          540          630          720

CRANK ANGLE (deg)

Fig. 5

11

12

13

Fig. 6

Fig. 7

Fig. 8

F i g . 9

F i g . 1 0

Fig. 11

Fig. 12

Fig. 13

Fig. 14

Fig. 15

Fig. 16

NOx CONCENTRATION

HIGH

SPECIFIC FUEL CONSUMPTION  LARGE

Fig. 17

NOx CONCENTRATION

HIGH

SMOKE INDEX    LARGE

Fig. 18

Fig. 19

EP 1 424 474 A1

FRESH AIR BLOW BY RATE
CHANGING RATIO [—]

1.6
1.4
1.2
1.0
0.8
0.6
0.4

MASS-PRODUCED    OL SHORTENING    OL SHORTENING    OL SHORTENING
CAM              NO RE-OPENING     RE-OPENING 60°    RE-OPENING 80°
                 (D2)             (D3)             (D4)

Fig. 20

(1) CASE THAT OVERLAP IS LONG

Fig. 21

*(2)* CASE THAT OVERLAP IS SHORTENED

Fig. 22

Fig. 23A

AIR SUPPLY STROKE

Fig. 23B

COMPRESSION STROKE
FIRST STAGE

Fig. 23C

COMPRESSION STROKE
LATER STAGE

Fig. 24

AIR SUPPLY STROKE  COMPRESSION STROKE

AIR SUPPLY
VALVE LIFT

SUPPLY AIR
DISCHARGING PERIOD

BDC          CRANK ANGLE

Fig. 25

EXHAUST VALVE
OPENING PERIOD

TDC

AIR SUPPLY VALVE
OPENING PERIOD

OL

$\theta_2$

BDC

Fig. 26

Fig. 27A

AIR SUPPLY STROKE

Fig. 27B

AIR SUPPLY STROKE
LAST STAGE

Fig. 27C

COMPRESSION STROKE

Fig. 28

EXHAUST VALVE
OPENING PERIOD

TDC

AIR SUPPLY VALVE
OPENING PERIOD

OL

$\theta_3$

BDC

Fig. 29

PRESSURE   HIGH

EO

ADIABATIC
EXPANSION

SC

EC

SO

VOLUME

LARGE

## INTERNATIONAL SEARCH REPORT

| International application No. |
|---|
| PCT/JP02/08963 |

**A. CLASSIFICATION OF SUBJECT MATTER**
Int.Cl$^7$ F02D13/02, F02D15/00, F01L1/08, F01L13/00

According to International Patent Classification (IPC) or to both national classification and IPC

**B. FIELDS SEARCHED**

Minimum documentation searched (classification system followed by classification symbols)
Int.Cl$^7$ F02D13/02, F02D15/00, F01L1/08, F01L13/00

Documentation searched other than minimum documentation to the extent that such documents are included in the fields searched
Jitsuyo Shinan Koho        1926-1996   Toroku Jitsuyo Shinan Koho   1994-2002
Kokai Jitsuyo Shinan Koho  1971-2002   Jitsuyo Shinan Toroku Koho   1996-2002

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | US 4424790 A (Societe d'Etudes de Machines<br>Thermiques, S.E.M.T.),<br>10 January, 1984 (10.01.84),<br>Full text; Figs. 1 to 9<br>& JP 55-107029 A      & AU 5523080 A<br>& DE 3066223 D      & NO 800291 A<br>& SE 8000846 A      & FI 800342 A<br>& DK 49080 A      & FR 2448032 A<br>& EP 15791 A1      & PL 221806 A<br>& ES 488160 A      & DD 148971 A<br>& IN 153625 A      & KR 8401288 B<br>& SU 1131476 A      & YU 30680 A<br>& CS 8000757 A      & HR 960056 B | 1<br>2-5 |

| ☒ | Further documents are listed in the continuation of Box C. | ☐ | See patent family annex. |
|---|---|---|---|

\* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>06 December, 2002 (06.12.02) | Date of mailing of the international search report<br>17 December, 2002 (17.12.02) |
|---|---|
| Name and mailing address of the ISA/<br>   Japanese Patent Office | Authorized officer |
| Facsimile No. | Telephone No. |

Form PCT/ISA/210 (second sheet) (July 1998)

**INTERNATIONAL SEARCH REPORT**

| International application No. |
| --- |
| PCT/JP02/08963 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>Y | US 4561253 A  (Societe d' Etudes de Machines<br>Thermiques, S.E.M.T.),<br>31 December, 1985 (31.12.85),<br>Full text; Figs. 1 to 5<br>& JP 58-70023 A          & DE 3272146 D<br>& FI 823103 A0          & FR 2512496 A<br>& NO 823058 A          & FI 823103 A<br>& DK 403982 A          & EP 75502 A1<br>& PL 238197 A          & ES 515644 A<br>& BR 8205332 A          & KR 8302774 U<br>& CS 8206464 A          & SU 1259964 A<br>& IN 158573 A          & YU 204082 A<br>& HR 920932 B | 1<br>2-5 |
| Y | US 4958606 A1  (Mazda Motor Corp.),<br>25 September, 1990 (25.09.90),<br>Fig. 4<br>& JP 63-239312 A          & JP 63-195325 A<br>& EP 269125 A2          & DE 3781100 A<br>& KR 9102898 B | 2 |
| Y | JP 9-268930 A  (Nissan Motor Co., Ltd.),<br>14 October, 1997 (14.10.97),<br>Full text; Fig. 1<br>(Family: none) | 3 |
| Y | JP 2000-230438 A  (Nissan Motor Co., Ltd.),<br>22 August, 2000 (22.08.00),<br>Fig. 2<br>(Family: none) | 4 |
| Y | Microfilm of the specification and drawings annexed<br>to the request of Japanese Utility Model Application<br>No. 57875/1984 (Laid-open No. 171911/1985)<br>(Mitsubishi Heavy Industries, Ltd.),<br>14 November, 1985 (14.11.85),<br>Full text; Figs. 2, 3<br>(Family: none) | 5 |

Form PCT/ISA/210 (continuation of second sheet) (July 1998)